# EUROPÄISCHE PATENTANMELDUNG

(11) **EP 4 462 220 A1**
(43) Veröffentlichungstag der Anmeldung: **13.11.2024**
(21) Anmeldenummer: 23020221.0
(22) Anmeldetag: 12.05.2023
(51) Int. Cl.: G05D 11/13, B01F 23/00

(54) **VERFAHREN UND ANLAGE ZUR DOSIERUNG EINES ERSTEN FLUIDS IN EINEN STROM EINES ZWEITEN FLUIDS**

(71) Anmelder: Linde GmbH, 82049 Pullach (DE)
(72) Erfinder: Schwarzhuber, Josef, 82049 Pullach (DE); Helfenbein, Sebastian (geb. Mayer), 82049 Pullach (DE)
(74) Vertreter: Fischer, Werner

(57) **Zusammenfassung**

Die Erfindung schlägt ein Verfahren zur Dosierung eines ersten Fluids (11) in einen Strom eines zweiten Fluids (12), wobei das erste Fluid (11) auf einem ersten Druckniveau und das zweite Fluid (12) auf einem zweiten Druckniveau vorliegt, vor, umfassend ein Ermitteln einer erforderlichen Dosierrate des ersten Fluids (11) zur Erreichung einer Zielkonzentration zumindest eines Bestandteils des ersten Fluids (11) in dem zweiten Fluid (12) unter Berücksichtigung einer Flussrate des zweiten Fluids (12), und ein Einstellen einer Ventilstellung eines Ventils (212), das einen Vorratsbehälter (210), in dem das erste Fluid (11) auf dem ersten Druckniveau enthalten ist, mit einem Durchflusspfad (120) des zweiten Fluids (12) verbindet, in Abhängigkeit von der ermittelten Dosierrate, wobei das zweite Druckniveau bei zumindest 0,5 Mpa, 1 Mpa, 1,5 Mpa, 2Mpa, 2,5 Mpa oder über 3 Mpa liegt und das erste Druckniveau höher als das zweite Druckniveau liegt. Ferner wird eine Anlage (200) vorgeschlagen, die zur Durchführung eines derartigen Verfahrens eingerichtet ist.

## Beschreibung

Die Erfindung betrifft ein Verfahren zur Dosierung eines ersten Fluids in einen Strom eines zweiten Fluids, wobei das zweite Fluid auf einem hohen Druckniveau vorliegt.

Unter einem "hohen Druckniveau" sind vorliegend Fluiddrücke von oberhalb Atmosphärendruck und insbesondere oberhalb 0,5 MPa (5 bar), 1 MPa (10 bar), 1,5 MPa (15 bar), 2 MPa (20 bar), 2,5 MPa (25 bar) oder 3 MPa (30 bar), insbesondere zwischen 0,5 bis 4 MPa oder zwischen 2 und 4 MPa oder zwischen 3 und 4 MPa, gemeint.

### Hintergrund der Erfindung

In vielen großtechnischen Verfahren ist es erforderlich, Chemikalien, die in flüssiger oder gasförmiger Form, beispielsweise als Reinstoffe oder Lösungen, vorliegen (im Folgenden allgemein als Fluide bezeichnet), präzise zu dosieren, um eine Zielkonzentration einzustellen.

Beispielsweise wird bei der konventionellen, großtechnischen Herstellung von Wasserstoff Erdgas bei hohem Druck, beispielsweise oberhalb von 2 MPa, mit Dampf vermischt und in einem gefeuerten Reformer-Reaktor zu Synthesegas umgesetzt.

Im Erdgas enthaltene organische und anorganische Schwefelspezies müssen vor den eigentlichen Reforming-Schritten vollständig aus dem Erdgas entfernt werden, um ein rasches Deaktivieren der Reformingkatalysatoren zu vermeiden.

Die Entschwefelung des Erdgases erfolgt meist in zwei Schritten:
1. Hydrierung der verschiedenen Schwefelspezies zu H₂S (Schwefelwasserstoff)
2. Adsorption des gebildeten H₂S (in der Regel an ZnO-Material)

Die Hydrierung zu H₂S kann beispielsweise in einem (oder mehreren) adiabaten Katalysatorbett(en) erfolgen. Je nach Katalysatormaterial (z.B. CoMo oder NiMo als aktive Komponente) ist ein gewisser Grundgehalt an Schwefel im Feed zur Hydrierung erforderlich, da für die Hydrierung, insbesondere von organisch gebundenem Schwefel, nur die sulfidierte Form des Katalysators aktiv ist.

Bei sehr schwefelarmem Erdgas oder einem Erdgasfeed mit variierender Qualität kann es daher erforderlich sein, Schwefel in einem Konzentrationsbereich von zum Beispiel 1-2 Mol-ppm (S) in Bezug auf den Feed zuzudosieren. Dabei sollte die Schwefeldosierung möglichst exakt erfolgen:
- eine zu geringe Schwefeldosierung hätte eine Deaktivierung bzw. eine nicht ausreichende Aktivierung des Hydrierkatalysators zur Folge,
- eine zu hohe Schwefeldosierung resultiert in einer zusätzlich abzuscheidenden Menge an H₂S auf dem nachfolgenden Katalysatorbett, und damit in einem erhöhten Verbrauch bzw. Bedarf an ZnO-Adsorbens.

Als Schwefelquelle wird in der Regel Dimethyldisulfid (DMDS) eingesetzt, das als Flüssigkeit dosiert wird.

### Zusammenfassung der Erfindung

Bei dem oben erläuterten Beispiel, aber auch bei anderen Verfahren, die eine Dosierung von Fluiden bei hohem Druck erfordern, ist es notwendig, sehr geringe Mengen (zum Beispiel unter 100ml/h) eines ersten Fluids, insbesondere einer Flüssigkeit, an der Dosierstelle in ein zweites Fluid, das dort bei hohem Druck (zum Beispiel über 2 MPa, 3 MPa, 4 MPa, jeweils absolut) vorliegt, exakt und möglichst kontinuierlich zu dosieren.

Die Erfindung schlägt hierzu vor, dass das erste Fluid, das zur Einstellung der Konzentration bestimmter Zielkomponenten (z.B. Schwefel) in einem zweiten Fluid verwendet wird, bereits vor der Zudosierung auf ein Druckniveau angehoben und/oder auf einem Druckniveau vorgehalten wird, das oberhalb dem Druckniveaus liegt, auf dem das zweite Fluid vorliegt, so dass zur Zudosierung des ersten Fluids insbesondere keine Dosiervorrichtung in Form einer Pumpe oder eines Verdichters benötigt wird. Die Erfindung ist dabei nicht auf die eingangs lediglich als Beispiel angegebene Problemstellung der Erdgasentschwefelung beschränkt, sondern kann grundsätzlich in allen Verfahren, die eine Dosierung von Fluiden bei hohem Druck erfordern, eingesetzt werden.

Im Einzelnen umfasst ein erfindungsgemäßes Verfahren zur Dosierung eines ersten Fluids in einen Strom eines zweiten Fluids, wobei das erste Fluid auf einem ersten Druckniveau und das zweite Fluid auf einem zweiten Druckniveau vorliegt, ein Ermitteln einer erforderlichen Dosierrate des ersten Fluids zur Erreichung einer Zielkonzentration zumindest eines Bestandteils des ersten Fluids in dem zweiten Fluid unter Berücksichtigung einer Flussrate des zweiten Fluids, und ein Einstellen einer Ventilstellung eines Ventils, das einen Vorratsbehälter, in dem das erste Fluid auf dem ersten Druckniveau enthalten ist, mit einem Durchflusspfad des zweiten Fluids verbindet, in Abhängigkeit von der ermittelten Dosierrate, wobei das zweite Druckniveau bei zumindest 0,5 MPa, 1 MPa, 1,5 MPa, 2MPa, 2,5 MPa oder über 3 MPa liegt und das erste Druckniveau höher als das zweite Druckniveau liegt. Durch die Verwendung eines bei hohem Druck bevorrateten ersten Fluids kann auf eine Pumpe bzw. einen Verdichter verzichtet werden.

Ist hier von dem zumindest einen Bestandteil des ersten Fluids die Rede, so bezieht sich diese Formulierung insbesondere auf eine in dem ersten Fluid enthaltene chemische Verbindung (z.B. DMDS), eine aus dem ersten Fluid oder zumindest einem Bestandteil des ersten Fluids gebildete chemische Verbindung (z.B. H₂S) oder auch auf einen oder mehrere Bestandteile einer in dem ersten Fluid enthaltenen oder aus dem ersten Fluid gebildeten chemischen Verbindung. Insbesondere kann sich diese Formulierung auch nur auf ein oder mehrere einzelne chemische Elemente (z.B. Schwefel), das bzw. die in einer oder mehreren in dem ersten Fluid enthaltenen chemischen Verbindungen enthalten sind, beziehen.

Das zweite Fluid kann insbesondere einen Stoff beinhalten, der aus einer Gruppe ausgewählt ist, die Methan, Ethan, Propan, Butan, gesättigten Kohlenwasserstoffen, ungesättigten Kohlenwasserstoffen, aliphatischen Kohlenwasserstoffen, aromatischen Kohlenwasserstoffen und Wasser umfasst. Dies sind großtechnisch besonders relevante Stoffe, bei deren Verarbeitung häufig eine Zudosierung weiterer Fluide erforderlich ist.

Das Verfahren umfasst in zumindest einer Ausgestaltung, das zweite Fluid stromab der Zudosierung des ersten Fluids unter Verwendung eines Katalysators zumindest einer katalytischen Umsetzung zu unterwerfen. Insbesondere kann dabei der zumindest eine Bestandteil des ersten Fluids mit dem Katalysator zur Reaktion gebracht werden, wobei der Katalysator durch die Reaktion mit dem zumindest einen Bestandteil des ersten Fluids in eine für die katalytische Umsetzung aktive Form überführt wird. Dies entspricht im Wesentlichen der eingangs erläuterten Aktivierung des Hydrierkatalysators für eine Entschwefelung des zweiten Fluids, wobei diese Ausgestaltung nicht auf diesen speziellen Prozess beschränkt ist, sondern auch andere Katalysatorsysteme mittels eines in das zweite Fluid zudosierten ersten Fluids derartig aktiviert werden können.

Insbesondere kann in einer solchen Ausgestaltung der Katalysator einen Hydrierkatalysator zur Hydrierung von Schwefelverbindungen zu Schwefelwasserstoff umfassen und der zumindest eine Bestandteil des ersten Fluids zumindest eine Schwefelverbindung umfassen, die zur Sulfidierung des Hydrierkatalysators geeignet ist, wobei die zumindest eine Schwefelverbindung insbesondere Dimethyldisulfid (DMDS) umfasst. Damit kann das erfindungsgemäße Verfahren für die eingangs erläuterte Dosierung zur Aktivierung des beispielsweise für die Entschwefelung von Erdgas verwendeten Hydrierkatalysators verwendet werden, wobei ein solcher Hydrierkatalysator, und damit auch diese Ausgestaltung der Erfindung, auch für andere Prozesse und nicht zwangsläufig im Rahmen einer Erdgasverarbeitung verwendet werden kann.

In zumindest einer Ausgestaltung der Erfindung wird das erste Druckniveau durch Beaufschlagung des Vorratsbehälters mit einem Inertgas eingestellt. Dies ist eine besonders kostengünstig durchzuführende Maßnahme und trägt zugleich zur Anlagensicherheit und zur Qualitätssicherung in Bezug auf das erste Fluid bei.

In zumindest einer Ausgestaltung der Erfindung ist die Zielkonzentration kleiner als 1 Molprozent, 3000 Mol-ppm, 1000 Mol-ppm, 300 Mol-ppm, 100 Mol-ppm, 30 Mol-ppm, 10 Mol-ppm, 3 Mol-ppm oder kleiner als 1 Mol-ppm. Die Erfindung eignet sich besonders für derartig niedrige Dosierungen, die herkömmlicherweise große Herausforderungen darstellen, insbesondere im Zusammenhang mit hohen Zieldrücken (zweites Druckniveau).

Das erste Fluid kann insbesondere leicht entzündlich sein und/oder kann mit Luft unter Atmosphärendruck brennbare und/oder explosionsfähige Gemische bilden. Dadurch, dass aufgrund der Erfindung keine Pumpe bzw. Verdichter, sondern lediglich Ventile zur Einstellung des Zieldrucks (zweites Druckniveau) erforderlich sind, ist die Erfindung besonders zur Dosierung von derartigen Gefahrstoffen geeignet, da Ventile in der Regel als potentielle Zündquellen unproblematisch sind.

In zumindest einer Ausgestaltung der Erfindung umfasst das Verfahren ferner die nachfolgend angegebenen Schritte, insbesondere in der angegebenen Reihenfolge:
Absperren der Verbindung von dem Vorratsbehälter über das Ventil zu dem Durchflusspfad,
Reduzieren des Drucks in dem Vorratsbehälter von dem ersten Druckniveau auf ein drittes Druckniveau, das unterhalb des zweiten Druckniveaus liegt, insbesondere wobei das dritte Druckniveau in einem Bereich von einem Atmosphärendruck bis maximal 0,5 MPa liegt,
Einfüllen einer Nachfüllmenge des ersten Fluids in den Vorratsbehälter, Erhöhen des Drucks in dem Vorratsbehälter von dem dritten Druckniveau auf das erste Druckniveau, und
Öffnen der Verbindung von dem Vorratsbehälter über das Ventil zu dem Durchflusspfad.

Damit kann auch ein Nachfüllen des Vorratsbehälters ohne Verdichter bzw. Pumpe erfolgen, da kein hoher Druckunterschied überwunden werden muss. Beispielsweise kann das Nachfüllen daher unter Verwendung einer Handpumpe oder einer pneumatisch betriebenen Pumpe erfolgen oder durch Beaufschlagen eines Transportbehälters des ersten Fluids mit einem Inertgas, beispielsweise bei Verwendung eines Steigrohrs. Dies trägt zur Betriebssicherheit, insbesondere in Bezug auf die bereits erläuterte Problematik im Hinblick auf potentielle Zündquellen, bei.

Eine erfindungsgemäße Anlage ist zur Durchführung zumindest einer Ausgestaltung Verfahrens gemäß der vorstehenden Beschreibung eingerichtet und umfasst zumindest einen Vorratsbehälter, der zur Aufnahme eines ersten Fluids bei einem ersten Druckniveau eingerichtet ist, eine Vorrichtung zur Einstellung des ersten Druckniveaus in dem Vorratsbehälter, einen Durchflusspfad, der zur Durchleitung eines zweiten Fluids auf einem zweiten Druckniveau eingerichtet ist, und ein Ventil, das den Vorratsbehälter mit dem Durchflusspfad verbindet und dazu eingerichtet ist, eine Dosierrate des ersten Fluids zu dem zweiten Fluid einzustellen, wobei das zweite Druckniveau bei zumindest 0,5 MPa, 1 MPa, 1,5 MPa, 2MPa, 2,5 MPa oder über 3 MPa liegt und das erste Druckniveau höher als das zweite Druckniveau liegt. Die erfindungsgemäße Anlage profitiert daher von den in Bezug auf entsprechende Ausgestaltungen des erfindungsgemäßen Verfahrens erläuterten Vorteilen sinngemäß entsprechend.

### Kurze Beschreibung der Figuren

Weitere Aspekte der Erfindung sowie deren Vorteile werden im Folgenden unter Bezugnahme auf die beiliegende Zeichnung erläutert. Dabei zeigt:
Figur 1 eine herkömmliche Anordnung zur Zudosierung von Fluiden zu einem unter hohem Druck vorliegenden Fluidstrom;
Figur 2 eine erfindungsgemäße Anordnung zur Zudosierung von Fluiden zu einem unter hohem Druck vorliegenden Fluidstrom.

### Detaillierte Beschreibung

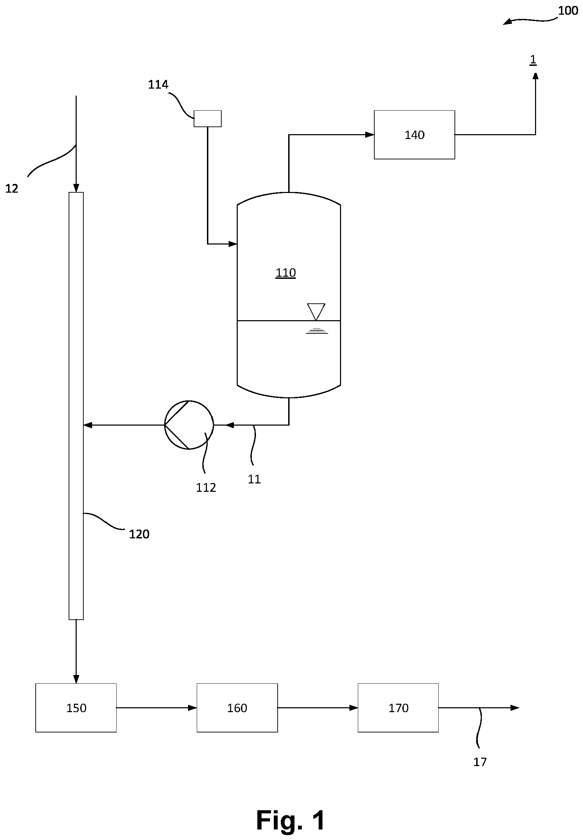

In Figur 1 ist eine Anordnung zur Zudosierung von Fluiden zu einem unter hohem Druck vorliegenden Fluidstrom, wie sie herkömmlicherweise Verwendung findet, schematisch gezeigt und insgesamt mit 100 bezeichnet.

Die Anordnung 100 weist einen Durchflusspfad 120 auf, der dazu eingerichtet ist, ein Einsatzfluid 12 (im Rahmen der vorliegenden Offenbarung auch als zweites Fluid bezeichnet) einem Prozess 150, 160, 170 zuzuführen. Bei dem Durchflusspfad kann es sich beispielsweise um eine Rohrleitung oder jede andere zur Durchleitung des Einsatzfluids geeignete Vorrichtung handeln. In einem Ausführungsbeispiel kann es sich bei dem Einsatzfluid um ein Erdgas enthaltendes Fluid oder um ein Gemisch, das Erdgas und Wasser(dampf) enthält, handeln. Das Einsatzfluid 12 passiert den Durchflusspfad 120 bei einem hier als zweites Druckniveau bezeichneten hohen Druck, der in einem Bereich über 0,5 MPa liegt, beispielsweise bei einem Druckniveau von 3-4 MPa.

Bei dem Prozess 170 kann es sich beispielsweise um eine Dampfreformierung des Einsatzfluids 12 handeln, der Prozessschritte 150, 160 zur Aufbereitung des Einsatzfluids 12 vorgelagert sind. Insbesondere kann es sich bei den vorgelagerten Prozessschritten 150, 160 zur Aufbereitung des Einsatzfluids 12 um eine katalytische Umwandlung 150, insbesondere eine Hydrierung von in dem Einsatzfluid 12 enthaltenen organischen und/oder anorganischen Schwefelverbindungen zu Schwefelwasserstoff (H₂S) und eine Adsorption 160 von Schwefelwasserstoff, beispielsweise an einem Zinkoxid (ZnO) enthaltenden Adsorbens, handeln. Nach dem Prozess 170 liegt ein Produktstrom 17 hier in Form von Synthesegas vor.

In der Anordnung 100 ist ein Vorratsbehälter 110 vorgesehen, der zur Aufnahme eines hier als erstes Fluid bezeichneten Fluids 11, beispielsweise Dimethyldisulfid (DMDS), bei einem Druck, der maximal dem fünffachen Atmosphärendruck entspricht, also einem Druck von maximal 0,5 MPa eingerichtet ist. Beispielsweise kann der Druck ein typischer Gegendruck einer Fackel (z.B. kleiner als 0,3 MPa) sein. In dem hier gezeigten Beispiel weist der Vorratsbehälter 110 einen Füllstutzen 114 auf, der zum Nachfüllen des ersten Fluids in den Vorratsbehälter eingerichtet ist. Ferner ist der Vorratsbehälter 110 mit einem Abzug 140 verbunden, wobei der Abzug insbesondere eine Fackel oder eine anderweitige Nachbehandlungsmöglichkeit umfasst, um einen Schadstoffausstoß in die Atmosphäre (mit 1 bezeichnet) zu minimieren bzw. zu vermeiden.

Zur Entnahme des ersten Fluids 11 aus dem Vorratsbehälter 110 ist eine Dosierpumpe 112 vorgesehen, mittels derer eine gewünschte Dosiermenge bzw. Dosierrate des ersten Fluids 11 zu dem zweiten Fluid 12 eingestellt wird. Dabei kann insbesondere eine Flussrate des zweiten Fluids 12, ein Gehalt an Schwefel in dem Einsatzfluid 12 und eine Zielkonzentration an Schwefel in dem Einsatzfluid stromauf der Hydrierung 150 berücksichtigt werden. Beispielsweise kann die Zielkonzentration an Schwefel in dem Einsatzfluid 12 stromauf der Hydrierung 150 in einem Bereich von 1-2 ppm, bezogen auf die Stoffmenge, betragen, um sicherzustellen, dass ein für die Hydrierung vorgesehener Katalysator, insbesondere mit aktivem CoMo- oder NiMo-Material, wie beispielsweise in der US 4943547 A beschrieben, auf die hier in diesem Zusammenhang ausdrücklich verwiesen wird, in seiner sulfidierten Form, die für die Hydrierung von Schwefelverbindungen die aktive Form darstellt, vorliegt.

Derartige herkömmliche Systeme weisen unter Anderem folgende Nachteile auf:
- Dosierpumpen zur Dosierung sehr kleiner Mengen bei sehr hohen Drücken sind schwer zu beschaffen, da nur eine geringe Auswahl an Herstellern besteht (ggf. single sourcing), wodurch Anschaffungskosten steigen;
- Dosierpumpen sind in der Regel mit elektrischem Motor betrieben, DMDS ist eine leicht entzündliche Flüssigkeit die hohe Sicherheitsanforderungen an den Motor stellt, insbesondere eine explosionsgeschützte Ausführung erfordern kann;
- Pumpen sind fehleranfällig. Für eine hohe Verfügbarkeit muss in der Regel eine Reservepumpe bereitgestellt werden;
- Aufgrund der hohen Druckdifferenz zwischen Vorratsbehälter 110 und Dosierstelle (Durchflusspfad 120), sowie der geringen Durchflussrate, sind Dosierpumpen in der Regel als Verdrängungspumpen ausgestaltet, deren Durchfluss periodisch schwankt, je nach eingestellter Dosierfrequenz und Hubvolumen. Für eine möglichst kontinuierliche Prozessführung, sowie einen möglichst konstanten Schwefelgehalt, ist jedoch eine schwankende Dosierung nachteilig.

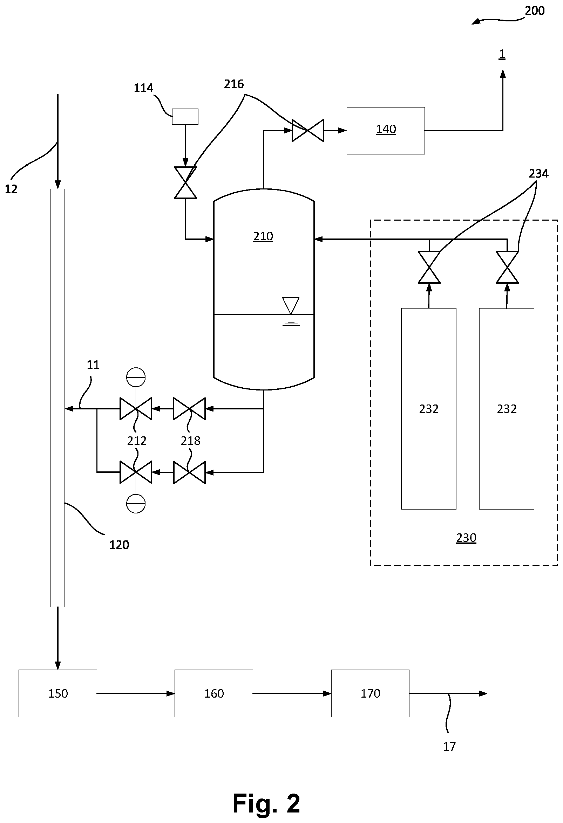

Demgegenüber ist in Figur 2 eine Ausgestaltung einer erfindungsgemäßen Anordnung schematisch gezeigt und insgesamt mit 200 bezeichnet. Dabei sind im Vergleich zu der in Figur 1 dargestellten herkömmlichen Anordnung gleichartige Bauteile mit identischen Bezugszeichen gekennzeichnet. Zu deren Erläuterung sei daher auch auf die obigen Ausführungen verwiesen.

Die Anordnung 200 weist im Unterschied zu der Anordnung 100 einen Vorratsbehälter 210 auf, der für einen Betrieb bei einem hier auch als erstes Druckniveau bezeichneten Druck, der höher als das zweite Druckniveau ist, ausgelegt ist. Beispielsweise kann das erste Druckniveau in einem Bereich zwischen 0,5 und 5 MPa, zum Beispiel bei ca. 2 bis 4 MPa, liegen. Dazu ist der Vorratsbehälter 210 entsprechend druckbeständig ausgestaltet und mit einer Vorrichtung 230 zur Beaufschlagung mit einem Inertgas, insbesondere Stickstoff oder Argon, ausgestattet. Beispielsweise kann es sich bei der Vorrichtung 230 um eine Anschlussstation 230 mit Druckbegrenzungsventilen 234 für eine oder mehrere Gasdruckflaschen 232 handeln.

Ferner sind an Aus- und Eingängen (z.B. Füllstutzen 114, Abzug 140) des Vorratsbehälters 210, die für einen Betrieb bei geringeren Drücken ausgelegt sind, Absperrventile 216 vorgesehen, um die betreffenden Komponenten während des Betriebs des Vorratsbehälters 210 bei dem ersten Druckniveau entsprechend fluidtechnisch von diesem zu trennen.

Der Vorratsbehälter 210 ist über ein Ventil 212, das zur Durchflussbegrenzung eingerichtet ist, mit dem Durchflusspfad 120 verbunden. Beispielsweise kann das Ventil 212 als Nadelventil ausgestaltet sein. Ein solches Durchflussbegrenzungsventil kann zur manuellen und/oder mechanisierten und/oder automatisierten Bedienung eingerichtet sein und beispielsweise über einen hydraulischen, pneumatischen, mechanischen oder elektrischen Antrieb verfügen. Bei mechanisierten bzw. automatisierten Ventilen 212 besteht die Möglichkeit der Dosierung des ersten Fluids 11 mittels einer in der Regel ohnehin vorhandenen Prozesssteuerung, z.B. mittels Massflow-Controller. In einigen Ausgestaltungen können auch mehrere Ventile 212 parallel zueinander geschaltet sein, wobei insbesondere Ventile mit unterschiedlichem Bedienkonzept verwendet werden können. Beispielsweise kann ein manuell zu bedienendes Ventil 212 und parallel dazu ein automatisiert zu bedienendes Ventil 212 vorgesehen sein, wobei jeweils zusätzlich ein Absperrventil 218 in jedem Ventilpfad verbaut sein kann, um ohne Verstellung der Durchflussmenge zwischen den verschiedenen Bedienmodi umschalten zu können. In Figur 2 sind zwei solche parallel angeordneten Ventilpfade dargestellt.

Die gewünschte Durchflussmenge bzw. Durchflussrate wird, im Wesentlichen analog zu der in Bezug auf Figur 1 erläuterten Vorgehensweise, basierend auf einer Flussrate des zweiten Fluids in dem Durchflusspfad 120, einer gewünschten Zielkonzentration des ersten Fluids 11 in dem zweiten Fluid 12 stromauf des Prozessschritts 150 und ggf. einer bereits bekannten Konzentration eines oder mehrerer Bestandteile des zweiten Fluids (z.B. Schwefelgehalt) eingestellt. Dabei wird die Fließbewegung des ersten Fluids hin zu dem Durchflusspfad 120 durch den bereits bestehenden Druckunterschied zwischen dem Vorratsbehälter 210 (erstes Druckniveau) und dem Durchflusspfad (zweites Druckniveau) bewirkt, ohne eine Pumpe oder einen Verdichter zu benötigen.

Ist ein Nachfüllen des ersten Fluids 11 in den Vorratsbehälter 210 erforderlich, kann zunächst die Verbindung zu dem Durchflusspfad 120 unterbrochen bzw. abgesperrt (z.B. mittels der Absperrventile 218) werden, um einen Rückfluss des zweiten Fluids 12 in Richtung des Vorratsbehälters 210 zu vermeiden.

Anschließend kann der Druck in dem Vorratsbehälter 210 reduziert werden, beispielsweise durch Öffnen des Absperrventils 216, das zur Fackel 140 führt. Damit sinkt der Behälterdruck auf einen hier als drittes Druckniveau bezeichneten Druck, der im Wesentlichen dem Gegendruck der Fackel 140, beispielsweise 100 kPa bis 300 kPa, entsprechen kann.

Dann wird über den Einfüllstutzen 114 (bei geöffnetem Absperrventil 216) eine Nachfüllmenge des ersten Fluids 11 in den Vorratsbehälter eingefüllt (beispielsweise unter Verwendung einer manuell oder mechanisiert betriebenen mechanischen Pumpe oder einer pneumatischen Pumpe) und anschließend alle Absperrventile 216 geschlossen. Zur Überwachung der Einfüllmenge kann beispielsweise ein Füllstandsanzeiger oder ein Sensor verwendet werden (nicht in der Figur dargestellt).

Dann kann der Druck in dem Vorratsbehälter 210 unter Verwendung der Vorrichtung 230 wieder auf das erste Druckniveau angehoben werden und das entsprechende Absperrventil 218 geöffnet werden.

Mit der Verwendung der Anordnung 200 ergeben sich daher einige Vorteile. Insbesondere ist innerhalb des explosionsgeschützen Bereichs um den Vorratsbehälter 210 (DMDS ist in der Lage, mit Luft explosionsfähige Gemische zu bilden) kein Elektromotor (Pumpenantrieb) erforderlich. Zudem ermöglicht die Verwendung des durchflussregulierenden Ventils 212 eine kontinuierliche, pulsationsfreie Dosierung des ersten Fluids. Ferner kann eine hohe Anlagenverfügbarkeit sichergestellt werden, da keine wartungsintensive Pumpe erforderlich ist. Schließlich ist die Lösung kosteneffizient, da auf Standardprodukte, die von unterschiedlichen Herstellern bezogen werden können, zurückgegriffen wird (Standardverrohrung, Ventile, Anschlüsse, ...). Lediglich der Vorratsbehälter 210 selbst muss für einen höheren Betriebsdruck ausgelegt werden, als dies in der herkömmlichen Anordnung 100 der Fall ist, wobei auch hierfür Standardprodukte verfügbar sind.

Es sei hier nochmals betont, dass die hier dargestellte Anordnung zur Herstellung von Synthesegas aus Erdgas lediglich als Anwendungsbeispiel zu verstehen ist und die Erfindung auch in gänzlich anderen Kontexten vorteilhaft eingesetzt werden kann, in denen ein erstes Fluid zu einem zweiten Fluid unter hohem Druck zudosiert werden soll.

Eine alternative Anwendungsmöglichkeit der Erfindung kann beispielsweise im Rahmen eines Dampfspalt-Verfahrens (Steamcracking) erfolgen, in welchem z.B. Antifouling- und/oder Anti-Korrosions-Chemikalien an verschiedenen Stellen im Prozess zudosiert werden, ebenfalls auf einem hohen Druckniveau im Sinne dieser Offenbarung.

## Patentansprüche

1. Verfahren zur Dosierung eines ersten Fluids (11) in einen Strom eines zweiten Fluids (12), wobei das erste Fluid (11) auf einem ersten Druckniveau und das zweite Fluid (12) auf einem zweiten Druckniveau vorliegt, umfassend, das Ermitteln einer erforderlichen Dosierrate des ersten Fluids (11) zur Erreichung einer Zielkonzentration zumindest eines Bestandteils des ersten Fluids (11) in dem zweiten Fluid (12) unter Berücksichtigung einer Flussrate des zweiten Fluids (12), und das Einstellen einer Ventilstellung eines Ventils (212), das einen Vorratsbehälter (210), in dem das erste Fluid (11) auf dem ersten Druckniveau enthalten ist, mit einem Durchflusspfad (120) des zweiten Fluids (12) verbindet, in Abhängigkeit von der ermittelten Dosierrate,
wobei das zweite Druckniveau bei zumindest 0,5 MPa, 1 MPa, 1,5 MPa, 2 MPa, 2,5 MPa oder über 3 MPa liegt und das erste Druckniveau höher als das zweite Druckniveau ist.

2. Verfahren nach Anspruch 1, wobei das zweite Fluid (12) einen oder mehrere Stoffe beinhaltet, die aus einer Gruppe ausgewählt sind, die Methan, Ethan, Propan, Butan, gesättigten Kohlenwasserstoffen, ungesättigten Kohlenwasserstoffen, aliphatischen Kohlenwasserstoffen, aromatischen Kohlenwasserstoffen und Wasser umfasst.

3. Verfahren nach Anspruch 1 oder 2, wobei das zweite Fluid (12) stromab der Zudosierung des ersten Fluids (11) unter Verwendung eines Katalysators zumindest einer katalytischen Umsetzung (150) zu unterwerfen.

4. Verfahren nach Anspruch 3, wobei der zumindest eine Bestandteil des ersten Fluids (11) mit dem Katalysator zur Reaktion gebracht wird, wobei der Katalysator durch die Reaktion mit dem zumindest einen Bestandteil des ersten Fluids (11) in eine für die katalytische Umsetzung (150) aktive Form überführt wird.

5. Verfahren nach einem der Ansprüche 3 oder 4, wobei der Katalysator einen Hydrierkatalysator zur Hydrierung von Schwefelverbindungen zu Schwefelwasserstoff umfasst und wobei der zumindest eine Bestandteil des ersten Fluids (11) zumindest eine Schwefelverbindung umfasst, die zur Sulfidierung des Hydrierkatalysators geeignet ist, wobei die zumindest eine Schwefelverbindung insbesondere Dimethyldisulfid umfasst.

6. Verfahren nach einem der vorstehenden Ansprüche, wobei das erste Druckniveau durch Beaufschlagung des Vorratsbehälters (210) mit einem Inertgas eingestellt wird.

7. Verfahren nach einem der vorstehenden Ansprüche, wobei die Zielkonzentration kleiner als 1 Molprozent, 3000 Mol-ppm, 1000 Mol-ppm, 300 Mol-ppm, 100 Mol-ppm, 30 Mol-ppm, 10 Mol-ppm, 3 Mol-ppm oder kleiner als 1 Mol-ppm ist.

8. Verfahren nach einem der vorstehenden Ansprüche, wobei das erste Fluid (11) leicht entzündlich ist und/oder mit Luft unter Atmosphärendruck brennbare und/oder explosionsfähige Gemische bilden kann.

9. Verfahren nach einem der vorstehenden Ansprüche, ferner umfassend die nachfolgend angegebenen Schritte, insbesondere in der angegebenen Reihenfolge:
Absperren der Verbindung von dem Vorratsbehälter (210) über das Ventil (212) zu dem Durchflusspfad,
Reduzieren des Drucks in dem Vorratsbehälter (210) von dem ersten Druckniveau auf ein drittes Druckniveau, das unterhalb des zweiten Druckniveaus liegt, wobei insbesondere das dritte Druckniveau in einem Bereich von Atmosphärendruck (1) bis maximal 0,5 MPa liegt,
Einfüllen einer Nachfüllmenge des ersten Fluids (11) in den Vorratsbehälter (210),
Erhöhen des Drucks in dem Vorratsbehälter (210) von dem dritten Druckniveau auf das erste Druckniveau, und
Öffnen der Verbindung (218) von dem Vorratsbehälter (210) über das Ventil (212) zu dem Durchflusspfad (120).

10. Anlage (200), die zur Durchführung eines Verfahrens gemäß eines der vorstehenden Ansprüche eingerichtet ist, umfassend
zumindest einen Vorratsbehälter (210), der zur Aufnahme eines ersten Fluids (11) bei einem ersten Druckniveau eingerichtet ist,
eine Vorrichtung (230) zur Einstellung des ersten Druckniveaus in dem Vorratsbehälter (210),
einen Durchflusspfad (120), der zur Durchleitung eines zweiten Fluids (12) auf einem zweiten Druckniveau eingerichtet ist, und
ein Ventil (212), das den Vorratsbehälter (210) mit dem Durchflusspfad (120) verbindet und dazu eingerichtet ist, eine Dosierrate des ersten Fluids (11) zu dem zweiten Fluid (12) einzustellen,
wobei das zweite Druckniveau bei zumindest 0,5 MPa, 1 MPa, 1,5 MPa, 2 MPa, 2,5 MPa oder über 3 MPa liegt und das erste Druckniveau höher als das zweite Druckniveau liegt.
